# EUROPÄISCHE PATENTSCHRIFT

(11) **EP 4 255 004 B1**
(45) Veröffentlichungstag und Bekanntmachung des Hinweises auf die Patenterteilung: **01.01.2025**
(21) Anmeldenummer: 22164764.7
(22) Anmeldetag: 28.03.2022
(51) Int. Cl.: H04W 12/30, H04W 12/03, H04W 12/06, H04L 9/40

(54) **VERFAHREN UND SYSTEM ZUM ONBOARDING FÜR EIN IOT-GERÄT**
METHOD AND SYSTEM FOR ONBOARDING FOR AN IOT DEVICE
PROCÉDÉ ET SYSTÈME D'EMBARQUEMENT D'UN APPAREIL IDO

(43) Veröffentlichungstag der Anmeldung: 04.10.2023
(73) Patentinhaber: Siemens Aktiengesellschaft, 80333 München (DE)
(72) Erfinder: Aschauer, Hans, 81829 München (DE); De Santis, Fabrizio, 80634 München (DE); Falk, Rainer, 85586 Poing (DE); Furch, Andreas, 85354 Freising (DE); Safieh, Malek, 81539 München (DE); Schneider, Daniel, 80796 München (DE); Wilde, Florian, 80333 München (DE); Zeschg, Thomas, 81543 München (DE)
(74) Vertreter: Siemens Patent Attorneys

(56) Entgegenhaltungen:
- US-A1- 2019 313 246
- US-A1- 2020 275 273
- US-A1- 2022 038 269
- PETER SCHWABE ET AL: "More efficient post-quantum KEMTLS with pre-distributed public keys", vol. 20220315:092001, 15 March 2022 (2022-03-15), pages 1 - 39, XP061070805, Retrieved from the Internet <URL:https://eprint.iacr.org/2021/779.pdf> [retrieved on 20220315]

## Beschreibung

Die vorliegende Erfindung betrifft ein Verfahren und ein Computerprogrammprodukt zum Onboarding für ein IoT-Gerät (IoT; Internet of Things) eines Herstellers in einer Infrastruktur eines Kunden mittels eines erstens Servers einer Hersteller-Domäne des Herstellers und eines zweiten Servers einer Kunden-Domäne des Kunden. Des Weiteren betrifft die vorliegende Erfindung ein System zum Onboarding für ein IoT-Gerät eines Herstellers in einer Infrastruktur eines Kunden.

Ein Beispiel für ein Onboarding für ein IoT-Gerät in einer Infrastruktur eines Kunden ist das Zero-Touch-Device-Onboarding. Zero-Touch-Device-Onboarding ist ein automatisierter Prozess, bei welchem Credentials (zum Beispiel X.509 Public-Key-Zertifikate) und Konfigurationseinstellungen auf einem IoT-Gerät installiert werden, ohne dass ein Servicetechniker eingreifen muss. Ein solches Onboarding kann auch als Provisioning oder Bootstrapping bezeichnet werden. Ein solcher Prozess benötigt ausreichend starke Sicherheitseigenschaften, damit nur die richtigen IoT-Geräte in der neuen Domäne, d.h. der Kunden-Domäne, vertrauenswürdig zum Einsatz kommen. Für den Onboarding Prozess erfolgt eine Kommunikation insbesondere zwischen drei Parteien:
1. Ein IoT-Gerät, auf dem Credentials und Konfigurationseinstellungen installiert werden;
2. Ein erster Server einer Hersteller-Domäne des Herstellers des IoT-Gerätes. Der erste Server kann auch als Device-Authority bezeichnet werden, wird vom Hersteller des IoT-Gerätes zur Verfügung gestellt und kann einerseits als Garantiegeber für die Authentizität bzw. Originalität des IoT-Gerätes dienen und andererseits dem IoT-Gerät vertrauenswürdige Informationen über die Kunden-Domäne bereitstellen;
3. Ein zweiter Server einer Kunden-Domäne des Kunden, in welchem das Onboarding des IoT-Gerätes erfolgen soll. Der zweite Server kann auch als Domain-Onboarding-Authority bezeichnet werden, wird vom Kunden des IoT-Gerätes betrieben und will Credentials und/oder Konfigurationsdaten für das IoT-Gerät ausgeben bzw. besitzt diese.

Ein IoT-Gerät, welches noch kein Onboarding durchgeführt hat, verbindet sich bei vorhandener Netzwerkkonnektivität mit dem zweiten Server, gegebenenfalls nach einer Discovery-Prozedur, um die Netzwerkadresse des zweiten Servers zu ermitteln. Der zweite Server verbindet sich wiederum mit dem ersten Server der Hersteller-Domäne. Sollte die Originalität des IoT-Gerätes erfolgreich verifiziert werden, dann stellt der zweite Server ein Gerätezertifikat, insbesondere umfassend Credentials und Konfigurationseinstellungen aus der Kundendomäne, für das IoT-Gerät bereit, welches das IoT-Gerät schließlich lokal installieren kann, dabei insbesondere unter Rückgriff auf seine Vertrauensbeziehung zu dem ersten Server. Damit ist der Onboarding-Prozess herkömmlicherweise erfolgreich beendet.

Aktuell erfolgen derartige Onboarding-Prozesse auf Basis von kryptographisch gesicherten Verbindungen, zum Beispiel TLS (Transport Layer Security) oder objektgebundener Sicherheit, wobei die Vertraulichkeit und Integrität von Daten und die Authentizität der in der Kommunikation involvierten Parteien sichergestellt wird.

Um die Authentizität von IoT-Geräten gegenüber dem zweiten Server oder gegenüber dem ersten Server zu verifizieren, werden herkömmlicherweise kryptographische Signaturverfahren zur Authentifizierung eingesetzt. Der zweite Server oder ein von ihm erreichbarer Dienst stellt üblicherweise ein digitales Gerätezertifikat für das IoT-Gerät aus, mit dem sich das IoT-Gerät nach erfolgtem Onboarding mittels eines kryptographischen Signaturverfahrens authentisieren kann.

Die Sicherheit aktueller asymmetrischer Kryptographie, die beim Onboarding eines IoT-Gerätes zur Kommunikation und zur Authentizitätsprüfung des IoT-Gerätes verwendet wird, wird zukünftig mit hoher Wahrscheinlichkeit mit leistungsfähigen Quantencomputern angreifbar sein. In US2022038269 A1 wird beispielsweise das Onboarding eines IoT-Gerätes mittels herkömmlicher Signaturen gesichert.

Daher besteht der Bedarf an einem Onboarding für ein IoT-Gerät, welches sicher und insbesondere auch effizient gegen Quantencomputerangriffe ist.

Vor diesem Hintergrund besteht eine Aufgabe der vorliegenden Erfindung darin, das Onboarding für ein IoT-Gerät eines Herstellers in einer Infrastruktur eines Kunden zu verbessern. Gemäß einem ersten Aspekt wird ein Verfahren zum Onboarding für ein IoT-Gerät (IoT; Internet of Things) eines Herstellers in einer Infrastruktur eines Kunden mittels eines erstens Servers einer Hersteller-Domäne des Herstellers und eines zweiten Servers einer Kunden-Domäne des Kunden vorgeschlagen. Das Verfahren umfasst die folgenden Schritte, insbesondere ein KEM-Verfahren verwendend (KEM; Key Encapsulation Mechanism) :
a) Aufbauen eines authentisierten und verschlüsselten ersten Kommunikationskanals zwischen dem ersten Server und dem zweiten Server umfassend Ableiten eines dem ersten Server und dem zweiten Server gemeinsamen ersten Sitzungsschlüssels,
b) Bereitstellen eines authentisierten und verschlüsselten zweiten Kommunikationskanals zwischen dem IoT-Gerät und dem zweiten Server umfassend Ableiten eines dem zweiten Server und dem IoT-Gerät gemeinsamen zweiten Sitzungsschlüssels,
c) Aufbauen eines über den zweiten Server laufenden, authentisierten und verschlüsselten dritten Kommunikationskanals zwischen dem IoT-Gerät und dem ersten Server, welchem ein dem IoT-Gerät und dem ersten Server gemeinsamer dritter Schlüssel zugeordnet wird,
d) Bilden einer Berechtigungs-Information durch das IoT-Gerät,
e) kryptographisches Schützen der gebildeten Berechtigungs-Information durch das IoT-Gerät mittels des dritten Schlüssels,
f) Übertragen der kryptographisch geschützten Berechtigungs-Information von dem IoT-Gerät über den zweiten Kommunikationskanal an den zweiten Server,
g) Übertragen der kryptographisch geschützten Berechtigungs-Information von dem zweiten Server über den ersten Kommunikationskanal an den ersten Server,
h) Entschlüsseln der von dem zweiten Server an den ersten Server übertragenen kryptographisch geschützten Berechtigungs-Information durch den ersten Server mittels des dritten Schlüssels,
i) Verschlüsseln, und vorzugsweise mit Integritätsschutz Versehen, der entschlüsselten Berechtigungs-Information durch den ersten Server mittels des ersten Sitzungsschlüssels,
j) Übertragen der mit dem ersten Sitzungsschlüssel verschlüsselten, und vorzugsweise integritätsgeschützten, Berechtigungs-Information von dem ersten Server über den ersten Kommunikationskanal an den zweiten Server,
k) Entschlüsseln, und vorzugsweise Integritätsprüfen, der mit dem ersten Sitzungsschlüssel verschlüsselten Berechtigungs-Information durch den zweiten Server,
l) Senden einer Anfrage zum Erhalt eines dem IoT-Gerät zugeordneten Gerätezertifikats der Kunden-Domäne von dem zweiten Server an eine Zertifizierungsstelle, insbesondere der Kunden-Domäne,
m) Übertragen des erhaltenen Gerätezertifikats, und vorzugsweise von Konfigurationsdaten der Kundendomäne, und der von dem zweiten Server entschlüsselten Berechtigungs-Information von dem zweiten Server über den zweiten Kommunikationskanal an das IoT-Gerät, und
n) Akzeptieren des von dem zweiten Server übertragenen Gerätezertifikats und gegebenenfalls von Konfigurationsdaten der Kundendomäne durch das IoT-Gerät, falls die von dem zweiten Server übertragene Berechtigungs-Information der gebildeten Berechtigungs-Information entspricht.

Damit wird ein Verfahren zum gegen Quantencomputerangriffe sicheren Onboarding für ein IoT-Gerät eines Herstellers in einer Infrastruktur eines Kunden mittels eines erstens Servers einer Hersteller-Domäne des Herstellers und eines zweiten Servers einer Kunden-Domäne des Kunden geschaffen, bei welchem unter Verwendung von drei authentisierten und verschlüsselten Kommunikationskanälen und eines Schlüsselkapselungsverfahrens ein Gerätezertifikat der Kunden-Domäne für das IoT-Gerät auf dem IoT-Gerät bereitgestellt wird.

Das vorliegende Onboarding ist insbesondere ein Zero-Touch-Device-Onboarding und damit ein automatisierter Prozess, ohne dass ein Servicetechniker einzugreifen hat, bei dem das Gerätezertifikat der Kunden-Domäne an das IoT-Gerät übertragen wird und insbesondere von diesem akzeptiert und installiert wird. Mit oder nach dem Gerätezertifikat können weitere Konfigurationseinstellungen und/oder Credentials auf dem IoT-Gerät installiert werden.

Das KEM-Verfahren wird auch als Schlüsselkapselungsverfahren (KEM-Verfahren, KEM: key encapsulation mechanism) bezeichnet. Das vorliegende Verfahren zum Onboarding kann auch als Onboarding-Verfahren oder Device-Onboarding-Verfahren oder - Prozess bezeichnet werden. Das vorliegende Device-Onboarding-Verfahren nutzt im Gegensatz zu herkömmlichen Lösungen insbesondere hinsichtlich Signaturverfahren im Wesentlichen die Prüfung von Zertifikatssignaturen. Durch hauptsächlichen Einsatz KEM-basierter Verfahren ergibt sich ein erhöhter Schutz gegenüber Quantencomputerangriffen. Vorliegend erfolgen somit lediglich Signaturprüfungen im Rahmen der Zertifikatsvalidierungen.

Das vorliegende Device-Onboarding-Verfahren bietet den technischen Vorteil, dass außerhalb der Zertifizierungsstelle (auch Certification Authority genannt) keine Signaturerzeugungsverfahren benötigt werden. Folglich besteht außerhalb der Zertifizierungsstelle vorteilhafterweise kein Bedarf an einer sicheren Verwaltung von privaten Signaturschlüsseln, da keine privaten Signaturschlüssel benötigt werden und folglich auch kein sicherer Speicher hierfür nötig ist. Ferner besteht vorteilhafterweise vorliegend kein Bedarf an einer Implementierung eines Signaturerzeugungsverfahrens, da vorliegend kein Signaturerzeugungsverfahren benutzt wird. Folglich wird eine kleinere Code-Basis erreicht. Sollte demnach ein Signaturerzeugungsverfahrens bzw. die Implementierung eines Signaturerzeugungsverfahrens von einem zukünftigen Angriff oder Bug betroffen sein, so ist das vorliegende Device-Onboarding-Verfahren davon nicht betroffen.

Bei Vorliegen eines Fehlers während der Durchführung der Schritte a) bis n) wird das Verfahren vorzugsweise abgebrochen und neu gestartet.

Gemäß einer Ausführungsform wird der authentisierte und verschlüsselte erste Kommunikationskanal und/oder der authentisierte und verschlüsselte zweite Kommunikationskanal mittels eines KEM-Verfahrens kryptographisch geschützt.

Durch den Einsatz eines KEM-Verfahrens zum kryptographischen Schützen wird das vorliegende Verfahren insbesondere vorteilhaft hinsichtlich Einsatz von Post-Quantum Verfahren und Resistenz gegen Quantencomputerangriffe.

Durch die Verwendung eines KEM-Verfahrens können sich Performance-Vorteile ergeben, da KEM-Verfahren häufig performanter als Signaturverfahren sind. Außerdem kann das vorliegende Onboarding-Verfahren sehr einfach sicher gegen Quantencomputerangriffe gemacht werden, indem Post-Quantum-KEM verwendet wird. Post-Quantum-KEMs werden derzeit vom US NIST (NIST; National Institute of Standards and Technology) standardisiert. Daher kann das vorliegende Onboarding-Verfahren auch als Post-Quantum-Device-Onboarding-Prozess angesehen werden. Außerdem können hybride (Prä-Quantum und Post-Quantum) KEM-Verfahren flexibel eingesetzt werden. Damit kann das vorliegende Verfahren auch als hybrider Prä-/Post-Quantum-Device-Onboarding-Prozess bezeichnet werden.

Nach erfolgreicher Durchführung des Schrittes n) ist das IoT-Gerät für eine Kommunikation innerhalb der Kunden-Domäne eingerichtet, d.h. das Onboarding ist erfolgreich abgeschlossen. Optional kann das IoT-Gerät das eingerichtete Gerätezertifikat, insbesondere KEMTLS-Gerätezertifikat, verwenden, um eine KEMTLS-Verbindung zu dem zweiten Server aufzubauen. Dies ermöglicht dem zweiten Server zu überprüfen, dass das Onboarding des IoT-Gerätes erfolgreich abgeschlossen ist.

Das IoT-Gerät bezieht sein Vertrauen in die neue Domäne, vorliegend die Kunden-Domäne, dadurch, dass nur der erste Server in der Lage ist, die Berechtigungs-Information, beispielsweise als Nonce (https://en.wikipedia.org/wiki/Cryptographic_nonce) ausgebildet, zu ermitteln, sowie durch die jeweiligen Prüfungen und Authentisierungen und die geschützten Kommunikationskanäle, vorliegend der erste, der zweite und der dritte Kommunikationskanal.

Der zweite Server bezieht sein Vertrauen in das IoT-Gerät über verschiedene Prüfungen und insbesondere darüber, dass er während des Kanalaufbaus, insbesondere KEMTLS-Kanalaufbaus, das zugehörige Gerätezertifikat validieren kann und die darin enthaltene Identitätsinformation, zum Beispiel anhand einer Inventarliste, gegenprüfen kann.

Der erste Server kann durch den authentisierten Schlüsselaustausch prüfen, ob der zweite Server eine verschlüsselte Zeichenkette, hier die kryptographisch geschützte Berechtigungs-Information, von einem autorisierten IoT-Gerät vorweisen kann.

Gemäß einer weiteren Ausführungsform wird als KEM-Verfahren KEMTLS verwendet. KEMTLS ist ein Kommunikationsprotokoll, das als Erweiterung für TLS 1.3 konzipiert ist, und KEM-basierte Verfahren anstatt Signaturverfahren zur Authentisierung sowie für den Schlüsselaustausch (Key Exchange) nutzt.

Bei KEMTLS wird ähnlich wie bei einem herkömmlichen TLS ein authentisierter und verschlüsselter Kommunikationskanal aufgebaut. Intern werden jedoch unterschiedliche kryptographische Primitive verwendet, d.h. KEM anstatt einer digitalen Signatur und anstatt eines herkömmlichen Schlüsselaustausch-Verfahrens (Key Exchange).

Gemäß einer weiteren Ausführungsform wird der authentisierte und verschlüsselte dritte Kommunikationskanal als ein direkter Kommunikationskanal zwischen dem IoT-Gerät und dem ersten Server ausgebildet.

Gemäß einer weiteren Ausführungsform wird der authentisierte und verschlüsselte dritte Kommunikationskanal als ein getunnelter Kommunikationskanal mittels Tunneling über den authentisierten und verschlüsselten ersten Kommunikationskanal und den authentisierten und verschlüsselten zweiten Kommunikationskanal ausgebildet, wobei der zweite Server insbesondere als Weiterleitungsinstanz hinsichtlich der Schritte f) und g) eingesetzt wird.

Gemäß einer weiteren Ausführungsform wird der erste Server vor der Durchführung des Schrittes a) mit einem Wurzelzertifikat der Hersteller-Domäne, einem Wurzelzertifikat der Kunden-Domäne, einem Nutzerzertifikat der Hersteller-Domäne für den ersten Server umfassend einen öffentlichen Schlüssel des ersten Servers und einem privaten Schlüssel des ersten Servers ausgestattet. Der zweite Server wird vor der Durchführung des Schrittes a) vorzugsweise mit dem Wurzelzertifikat der Hersteller-Domäne, dem Wurzelzertifikat der Kunden-Domäne, einem Nutzerzertifikat der Kunden-Domäne für den zweiten Server umfassend einen öffentlichen Schlüssel des zweiten Servers in der Kunden-Domäne und mit einem privaten Schlüssel des zweiten Servers ausgestattet. Das IoT-Gerät wird vor der Durchführung des Schrittes b) vorzugsweise mit dem Wurzelzertifikat der Hersteller-Domäne, mit einem Nutzerzertifikat der Hersteller-Domäne für das IoT-Gerät umfassend einen öffentlichen Schlüssel des IoT-Gerätes in der Hersteller-Domäne und mit einem privaten Schlüssel des IoT-Gerätes ausgestattet.

Gemäß einer weiteren Ausführungsform ist der erste Sitzungsschlüssel dem ersten Server und dem zweiten Server bekannt und dem IoT-Gerät unbekannt. Der zweite Sitzungsschlüssel ist vorzugsweise dem zweiten Server und dem IoT-Gerät bekannt und dem ersten Server unbekannt. Der dritte Schlüssel ist vorzugsweise dem ersten Server und dem IoT-Gerät bekannt und dem zweiten Server unbekannt.

Gemäß einer weiteren Ausführungsform umfasst der Schritt d), dass eine zufällige Zahl oder eine quasi-zufällige Zahl von dem IoT-Gerät als Berechtigungs-Information gebildet wird.

Beispielsweise bildet das IoT-Gerät eine Nonce als Berechtigungs-Information. Das IoT-Gerät ist der Aktor und der Ort der Bildung der Nonce.

Gemäß einer weiteren Ausführungsform ist der Schritt m) ausgebildet durch: Übertragen des erhaltenen Gerätezertifikats zusammen mit der Berechtigungs-Information von dem zweiten Server innerhalb einer einzigen Sitzung über den zweiten Kommunikationskanal an das IoT-Gerät, wobei die Berechtigungs-Information vorzugsweise als Teil einer Zertifikatserweiterung des Gerätezertifikats von dem zweiten Server über den zweiten Kommunikationskanal an das IoT-Gerät übertragen wird.

Vorzugsweise wird ein Hashwert des Wurzelzertifikats der Kunden-Domäne von dem ersten Server an das IoT-Gerät übertragen. Insbesondere wird dieser Hashwert des Wurzelzertifikats zusammen mit der Berechtigungsinformation auf Basis des öffentlichen KEM-Schlüssels des IoT-Geräts vom ersten Server unter Einsatz des Schlüsselkapselungsverfahrens verschlüsselt und dem IoT-Gerät als erweiterter Anteil der Berechtigungsinformation übermittelt.

Vorzugsweise sendet der zweite Server einen kryptographischen Hashwert des Wurzelzertifikats, das er für das IoT-Gerät verwenden möchte, an den ersten Server. Diesen Hashwert kann der erste Server, insbesondere nach erfolgter Prüfung, an das I-oT-Gerat zurück übermitteln, indem er ihn für das IoT-Gerät unter Einbeziehung eines weiteren geteilten Geheimnisses (Shared Secrets) verschlüsselt und zurück an den zweiten Server schickt, welcher diese Nachricht dem IoT-Gerät übermittelt. Das IoT-Gerät hat dadurch eine weitere Prüfmöglichkeit für das Wurzelzertifikat der Kunden-Domäne.

Gemäß einer weiteren Ausführungsform wird die in den Schritten f) und g) übertragene kryptographisch geschützte Berechtigungs-Information als eine KEM-geschützte Protokoll-Nachricht ausgebildet.

Gemäß einer weiteren Ausführungsform wird der authentisierte und verschlüsselte zweite Kommunikationskanal nach dem Schritt m) beendet oder invalidiert.

Gemäß einer weiteren Ausführungsform lässt das IoT-Gerät basierend auf der gebildeten Berechtigungs-Information nur das Laden genau eines Satzes von Konfigurationsdaten umfassend das Gerätezertifikat zu.

Gemäß einer weiteren Ausführungsform werden der erste Server, der zweite Server und das IoT-Gerät jeweils mit einem KEM-basierten Protokollstack ausgestattet. Dabei wird der KEM-basierte Protokollstack des IoT-Gerätes vorzugsweise zusätzlich mit der Eignung für Provisional-Accept ausgestattet. Der KEM-basierte Protokollstack ist vorzugsweise dazu eingerichtet, KEMTLS oder KEMTLS-PDK zu implementieren.

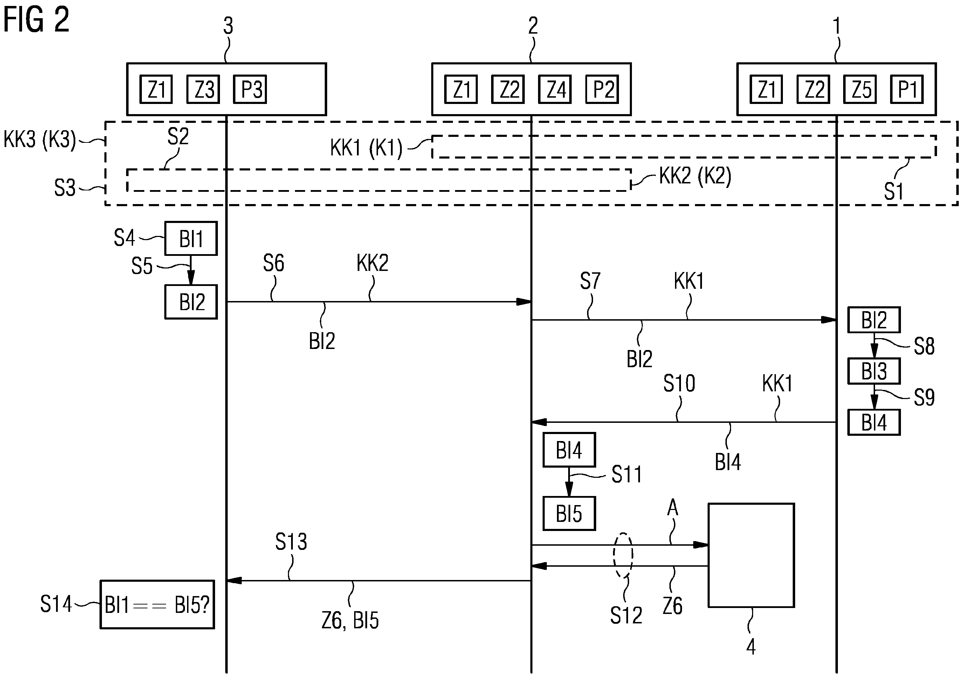

Provisional-Accept ist ein Mechanismus aus RFC 8995, bei dem ein sicherer Kanal zertifikatsbasiert aufgebaut wird, mit der einzigen Ausnahme, dass der Client, hier das IoT-Gerät, bei der ersten Prüfung des Serverzertifikats einen bestimmten Fehler zulässt. Dieser Fehler ist das Nichtvorhandensein eines vertrauenswürdigen Wurzelzertifikats, hier das Wurzelzertifikat der Kunden-Domäne, in seinem Speicher vertrauenswürdiger Wurzelzertifikate. Im Anschluss wird keine beliebige Kommunikation durch den so aufgebauten Kanal erlaubt, sondern lediglich ein reduzierter Ablauf gemäß einem linearen Automaten (siehe hierzu die detaillierte Beschreibung zur Fig. 2). Sobald es im Rahmen des beschriebenen Ablaufs zu einem Fehler kommt oder sobald vom beschriebenen Ablauf abgewichen wird, erfolgt ein Abbau des Kommunikationskanals und der Client, hier das IoT-Gerät, versetzt sich in den Zustand, den er vor Aufbau des Kommunikationskanals bereits hatte (sog. Rollback) .

Nach erfolgreicher Durchführung des Schrittes n) löst das I-oT-Gerät vorzugsweise den Provisional-Accept auf und überträgt das Gerätezertifikat, insbesondere ein KEMTLS-Gerätezertifikat, in seinen persistenten Speicher. Optional können auch weitere Zertifikate, insbesondere die Zertifikatskette oder das zugeordnete Wurzelzertifikat oder andere Konfigurationseinstellungen und/oder Konfigurationsinformationen durch das IoT-Gerät in den persistenten Speicher geschrieben werden. Das zugeordnete Wurzelzertifikat kann als vertrauenswürdig gekennzeichnet werden.

Gemäß einer weiteren Ausführungsform ist der Schritt c) ausgebildet durch: Aufbauen des über den zweiten Server laufenden, authentisierten und verschlüsselten dritten Kommunikationskanals zwischen dem IoT-Gerät und dem ersten Server umfassend Ableiten eines dem IoT-Gerät und dem ersten Server gemeinsamen dritten Sitzungsschlüssels.

Gemäß einer weiteren Ausführungsform wird eine geräteindividuelle PIN (oder PIN-Kode) vor der Durchführung des Schrittes c) in dem ersten Server und dem IoT-Gerät jeweils sicher gespeichert. Dabei wird die PIN zum Aufbauen des über den zweiten Server laufenden, authentisierten und verschlüsselten dritten Kommunikationskanals verwendet.

Dabei werden die Berechtigungs-Informationen und die PIN vorzugsweise durch das oben beschriebene KEM-Verfahren verschlüsselt, bilden also vorzugsweise direkt das durch Encapsulation geschützte Geheimnis. In diesem Fall können vorzugsweise sowohl KEM-Verfahren als auch PKE-Verfahren (PKE; Public Key Encryption) zum Einsatz kommen. Die PIN wird sowohl von dem ersten Server als auch innerhalb des IoT-Gerätes vertraulich gespeichert. In Ausführungsformen nutzt der erste Server ein Masterschlüsselverfahren zur Ableitung geräteindividueller PINs, um die Anzahl der Daten, welche vertraulich zu speichern sind, zu minimieren.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem ersten Aspekt oder einer der Ausführungsformen des ersten Aspekts veranlasst.

Ein Computerprogrammprodukt, wie zum Beispiel ein Computerprogramm-Mittel, kann beispielsweise als Speichermedium, wie zum Beispiel Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein System zum Onboarding für ein IoT-Gerät eines Herstellers in einer Infrastruktur eines Kunden vorgeschlagen. Das System umfasst einen ersten Server einer Hersteller-Domäne des Herstellers und einen zweiten Server einer Kunden-Domäne des Kunden, wobei der erste Server, der zweite Server und das IoT-Gerät zur Durchführung des Verfahrens gemäß dem ersten Aspekt oder einer der Ausführungsformen des ersten Aspekts eingerichtet sind.

Die für das vorgeschlagene Verfahren beschriebenen Ausführungsformen und Merkmale gelten für das vorgeschlagene System entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines Ausführungsbeispiels eines Verfahrens zum Onboarding für ein IoT-Gerät eines Herstellers in einer Infrastruktur eines Kunden; und
- Fig. 2: zeigt ein schematisches Kommunikations-Diagramm eines Ausführungsbeispiels eines Systems zum Onboarding für ein IoT-Gerät.

In den Figuren sind gleiche oder funktionsgleiche Elemente mit denselben Bezugszeichen versehen worden, sofern nichts anderes angegeben ist.

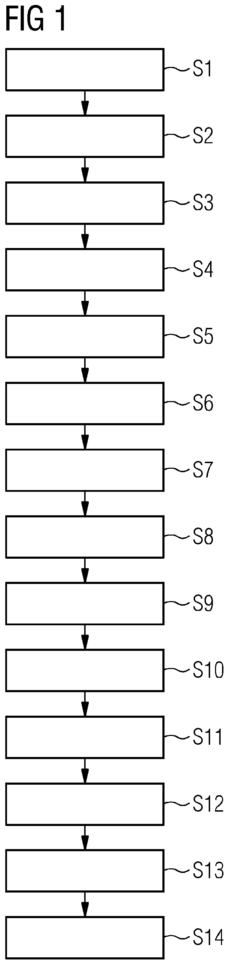

Fig. 1 zeigt ein schematisches Ablaufdiagramm eines Ausführungsbeispiels eines Verfahrens zum Onboarding für ein IoT-Gerät 3 eines Herstellers in einer Infrastruktur eines Kunden mittels eines erstens Servers 1 einer Hersteller-Domäne des Herstellers und eines zweiten Servers 2 einer Kunden-Domäne des Kunden. Das Ausführungsbeispiel nach Fig. 1 wird unter Bezugnahme auf die Fig. 2 erläutert. Hierbei zeigt die Fig. 2 ein schematisches Kommunikations-Diagramm eines Ausführungsbeispiels eines Systems zum Onboarding für das IoT-Gerät 3.

Das Kommunikations-Diagramm der Fig. 2 zeigt Kanalaufbau und Kommunikation zwischen dem ersten Server 1, dem zweiten Server 2 und dem IoT-Gerät 3.

Das Verfahren nach Fig. 1 umfasst die Schritte S1 bis S14. Diese Schritte S1 bis S14 sind auch in der Fig. 2 abgebildet. Vor der Durchführung der Schritte S1 bis S14 wird der erste Server 1 mit einem Wurzelzertifikat Z1 der Hersteller-Domäne, einem Wurzelzertifikat Z2 der Kunden-Domäne, einem Nutzerzertifikat Z5 der Hersteller-Domäne für den ersten Server 1 umfassend einen öffentlichen Schlüssel des ersten Servers 1 und einem privaten Schlüssel P1 des ersten Servers 1 ausgestattet. Der zweite Server 2 wird mit dem Wurzel-zertifikat Z1 der Hersteller-Domäne, dem Wurzelzertifikat Z2 der Kunden-Domäne, einem Nutzerzertifikat Z4 der Kunden-Domäne für den zweiten Server 2 umfassend einen öffentlichen Schlüssel des zweiten Servers 2 in der Kunden-Domäne und mit einem privaten Schlüssel P2 des zweiten Servers 2 ausgestattet. Das IoT-Gerät 3 wird mit dem Wurzelzertifikat Z1 der Hersteller-Domäne, mit einem Nutzerzertifikat Z3 der Hersteller-Domäne für das IoT-Gerät 3 umfassend einen öffentlichen Schlüssel des IoT-Geräts 3 in der Hersteller-Domäne und mit einem privaten Schlüssel P3 des IoT-Geräts 3 ausgestattet.

Insbesondere werden der erste Server 1, der zweite Server 2 und das IoT-Gerät 3 jeweils mit einem KEM-basierten Protokollstack ausgestattet. Hierbei wird der KEM-basierte Protokollstack des IoT-Geräts 3 vorzugsweise zusätzlich mit der Eignung für Provisional-Accept ausgestattet. Der KEM-basierte Protokollstack ist insbesondere dazu eingerichtet, KEMTLS oder KEMTLS-PDDK zu implementieren und wird insbesondere für die Durchführung des Verfahrens nach den Fig. 1 und 2 verwendet.

Nun zum Ablauf der Verfahrensschritte S1 bis S14 gemäß der Fig. 1 und 2:
In Schritt S1 wird ein authentisierter und verschlüsselter erster Kommunikationskanal KK1 zwischen dem ersten Server 1 und dem zweiten Server 2 aufgebaut. Dieses Aufbauen umfasst insbesondere ein Ableiten eines dem ersten Server 1 und dem zweiten Server 2 gemeinsamen Sitzungsschlüssels K1 (siehe Fig. 2).

In Schritt S2 wird ein authentisierter und verschlüsselter zweiter Kommunikationskanal KK2 zwischen dem IoT-Gerät 3 und dem zweiten Server 2 bereitgestellt. Dieses Bereitstellen umfasst insbesondere ein Ableiten eines dem zweiten Server 2 und dem IoT-Gerät 3 gemeinsamen zweiten Sitzungsschlüssels K2 (siehe Fig. 2). Der authentisierte und verschlüsselte erste Kommunikationskanal KK1 und/oder der authentisierte und verschlüsselte zweite Kommunikationskanal KK2 sind vorzugsweise mittels eines KEM-Verfahrens kryptographisch geschützt. Als KEM-Verfahren wird beispielsweise KEMTLS eingesetzt.

Der erste Sitzungsschlüssel K1 ist insbesondere dem ersten Server 1 und dem zweiten Server 2 bekannt, dem IoT-Gerät 3 aber unbekannt (siehe K1 in Fig. 2).

Der zweite Sitzungsschlüssel K2 hingegen ist dem zweiten Server 2 und dem IoT-Gerät 3 bekannt, dem ersten Server 1 aber unbekannt (siehe hierzu K2 in Fig. 2).

In Schritt S3 wird ein über den zweiten Server 2 laufender, authentisierter und verschlüsselter dritter Kommunikationskanal KK3 zwischen dem IoT-Gerät 3 und dem ersten Server 1 aufgebaut. Dem dritten Kommunikationskanal KK3 ist ein dem IoT-Gerät 3 und dem ersten Server 1 gemeinsamer dritter Schlüssel K3 zugeordnet (siehe K3 in Fig. 2). Der dritte Schlüssel K3 ist dem ersten Server 1 und dem IoT-Gerät 3 bekannt, dem zweiten Server 2 insbesondere unbekannt.

Beispielsweise wird der authentisierte und verschlüsselte dritte Kommunikationskanal KK3 als ein direkter Kommunikationskanal zwischen dem IoT-Gerät 3 und dem ersten Server 1 ausgebildet. Alternativ - und wie in dem Beispiel der Fig. 2 gezeigt - wird der dritte Kommunikationskanal KK3 als ein getunnelter Kommunikationskanal mittels Tunneling über den authentisierten und verschlüsselten ersten Kommunikationskanal KK1 und den authentisierten und verschlüsselten zweiten Kommunikationskanal KK2 ausgebildet. Hierbei wird der zweite Server 2 dann als Weiterleitungsinstanz verwendet.

Insbesondere kann der dritte Schlüssel K3 auch als ein Sitzungsschlüssel K3 ausgebildet sein. In diesem Fall kann der Schritt des Aufbauens des über den zweiten Server 2 laufenden, authentisierten und verschlüsselten dritten Kommunikationskanals KK3 zwischen dem IoT-Gerät 3 und dem ersten Server ein Ableiten eines dem IoT-Gerät 3 und dem ersten Server 1 gemeinsamen dritten Sitzungsschlüssels K3 umfassen.

In Schritt S4 wird eine Berechtigungs-Information BI durch das IoT-Gerät 3 gebildet. Das IoT-Gerät 3 ist der Aktor und der Ort der Bildung der Berechtigungs-Information BI. Insbesondere wird eine zufällige Zahl oder eine quasi-zufällige Zahl, beispielsweise eine Nonce, von dem IoT-Gerät 3 als Berechtigungs-Information BI1 gebildet.

In Schritt S5 wird die gebildete Berechtigungs-Information BI durch das IoT-Gerät 3 mittels des dritten Schlüssels K3 kryptographisch geschützt, insbesondere verschlüsselt. Kryptographisches Schützen umfasst insbesondere Integritätsschutz, Authentizität und Vertraulichkeit.

In Schritt S6 wird die kryptographisch geschützte Berechtigungs-Information BI2 von dem IoT-Gerät 3 über den zweiten Kommunikationskanal KK2 an den zweiten Server 2 übertragen.

In Schritt S7 wird die kryptographisch geschützte Berechtigungs-Information BI2 von dem zweiten Server 2 über den ersten Kommunikationskanal KK1 an den ersten Server 1 übertragen. Vorzugsweise ist die in den Schritten S6 und S7 übertragene kryptographisch geschützte Berechtigungs-Information BI2 als eine KEM-geschützte Protokoll-Nachricht ausgebildet.

In Schritt S8 wird die von dem zweiten Server 2 an den ersten Server 1 übertragene kryptographisch geschützte Berechtigungs-Information BI2 durch den ersten Server 1 mittels des dritten Schlüssels K3 zur Bereitstellung einer entschlüsselten Berechtigungs-Information BI3 entschlüsselt.

Im darauffolgenden Schritt S9 wird die bereitgestellte Berechtigungs-Information BI3 durch den ersten Server 1 mittels des ersten Sitzungsschlüssels K1 verschlüsselt.

In Schritt S10 wird die mit dem ersten Sitzungsschlüssel K1 verschlüsselte Berechtigungs-Information BI4 von dem ersten Server 1 über den ersten Kommunikationskanal KK1 an den zweiten Server 2 übertragen.

In Schritt S11 wird die mit dem ersten Sitzungsschlüssel K1 verschlüsselte Berechtigungs-Information BI4 durch den zweiten Server 2 entschlüsselt, so dass eine entschlüsselte Berechtigungs-Information BI5 an dem zweiten Server 2 vorliegt.

In Schritt S12 sendet der zweite Server 2 eine Anfrage A zum Erhalt eines dem IoT-Gerät 3 zugeordneten Gerätezertifikats Z6 der Kunden-Domäne an eine Zertifizierungsstelle 4, welche vorzugsweise der Kunden-Domäne zugeordnet ist.

Nach Erhalt des Gerätezertifikats Z6 überträgt der zweite Server 2 das Gerätezertifikat Z6 und die von ihm entschlüsselte Berechtigungs-Information BI5 über den zweiten Kommunikationskanal KK2 an das IoT-Gerät 3. Dabei wird vorzugsweise das von der Zertifizierungsstelle 4 erhaltene Gerätezertifikat Z6 zusammen mit der Berechtigungs-Information BI5 von dem zweiten Server 2 innerhalb einer einzigen Sitzung (Session) über den zweiten Kommunikationskanal KK2 an das IoT-Gerät 3 übertragen, wobei die Berechtigungs-Information BI5 vorzugsweise als Teil einer Zertifikatserweiterung des Gerätezertifikats Z6 übertragen wird.

Vorzugsweise wird zusätzlich ein Hash-Wert des Wurzelzertifikats Z2 der Kunden-Domäne von dem ersten Server 1 an das IoT-Gerät 3 kryptographisch geschützt übertragen. Der übertragene Hash-Wert des Wurzelzertifikats Z2 kann dem IoT-Gerät 3 zur Authentisierung des zweiten Servers 2 dienen.

Vorzugsweise wird der authentisierte und verschlüsselte zweite Kommunikationskanal KK2 nach dem Schritt S13 beendet oder invalidiert.

In Schritt S14 wird das von dem zweiten Server 2 übertragene Gerätezertifikat Z6 durch das IoT-Gerät 3 akzeptiert, falls die von dem zweiten Server 2 übertragene Berechtigungs-Information BI5 der an dem IoT-Gerät 3 im Schritt S4 gebildeten Berechtigungs-Information BI1 entspricht und das Wurzelzertifikat Z2 der Kundendomäne die Auflösung des Provisional-Accept erlaubt. Dazu speichert das IoT-Gerät 3 die in dem Schritt S4 gebildete Berechtigungsinformation BI1 in einer Speichereinheit des IoT-Geräts 3.

Vorzugsweise lässt das IoT-Gerät 3 basierend auf der gebildeten Berechtigungsinformation BI1 nur das Laden genau eines Satzes von Konfigurationsdaten, umfassend das Gerätezertifikat Z6, zu. Danach, d.h. nach Schritt S14, wird die gebildete Berechtigungsinformation BI1 vorzugsweise invalidiert.

Obwohl die vorliegende Erfindung anhand von Ausführungsbeispielen beschrieben wurde, ist sie vielfältig modifizierbar.

## Patentansprüche

1. Verfahren zum Onboarding für ein IoT-Gerät (3) eines Herstellers in einer Infrastruktur eines Kunden mittels eines erstens Servers (1) einer Hersteller-Domäne des Herstellers und eines zweiten Servers (2) einer Kunden-Domäne des Kunden, mit:
a) Aufbauen (S1) eines authentisierten und verschlüsselten ersten Kommunikationskanals (KK1) zwischen dem ersten Server (1) und dem zweiten Server (2) umfassend Ableiten eines dem ersten Server (1) und dem zweiten Server (2) gemeinsamen Sitzungsschlüssels (K1),
b) Bereitstellen (S2) eines authentisierten und verschlüsselten zweiten Kommunikationskanals (KK2) zwischen dem IoT-Gerät (3) und dem zweiten Server (2) umfassend Ableiten eines dem zweiten Server (2) und dem IoT-Gerät (3) gemeinsamen zweiten Sitzungsschlüssels (K2),
c) Aufbauen (S3) eines über den zweiten Server (2) laufenden, authentisierten und verschlüsselten dritten Kommunikationskanals (KK3) zwischen dem IoT-Gerät (3) und dem ersten Server (1), welchem ein dem IoT-Gerät (3) und dem ersten Server (1) gemeinsamer dritter Schlüssel (K3) zugeordnet wird,
d) Bilden (S4) einer Berechtigungs-Information (BI1) durch das IoT-Gerät (3),
e) kryptographisches Schützen (S5) der gebildeten Berechtigungs-Information (BI1) durch das IoT-Gerät (3) mittels des dritten Schlüssels (K3),
f) Übertragen (S6) der kryptographisch geschützten Berechtigungs-Information (BI2) von dem IoT-Gerät (3) über den zweiten Kommunikationskanal (KK2) an den zweiten Server (2),
g) Übertragen (S7) der kryptographisch geschützten Berechtigungs-Information (BI2) von dem zweiten Server (2) über den ersten Kommunikationskanal (KK1) an den ersten Server (1),
h) Entschlüsseln (S8) der von dem zweiten Server (2) an den ersten Server (1) übertragenen kryptographisch geschützten Berechtigungs-Information (BI2) durch den ersten Server (1) mittels des dritten Schlüssels (K3),
i) Verschlüsseln (S9) der entschlüsselten Berechtigungs-Information (BI3) durch den ersten Server (1) mittels des ersten Sitzungsschlüssels (K1),
j) Übertragen (S10) der mit dem ersten Sitzungsschlüssel (K1) verschlüsselten Berechtigungs-Information (BI4) von dem ersten Server (1) über den ersten Kommunikationskanal (KK1) an den zweiten Server (2),
k) Entschlüsseln (S11) der mit dem ersten Sitzungsschlüssel (K1) verschlüsselten Berechtigungs-Information (BI4) durch den zweiten Server (2),
l) Senden (S12) einer Anfrage (A) zum Erhalt eines dem IoT-Gerät (3) zugeordneten Gerätezertifikats (Z6) der Kunden-Domäne von dem zweiten Server (2) an eine Zertifizierungsstelle (4),
m) Übertragen (S13) des erhaltenen Gerätezertifikats (Z6) und der von dem zweiten Server (2) entschlüsselten Berechtigungs-Information (BI5) von dem zweiten Server (2) über den zweiten Kommunikationskanal (KK2) an das IoT-Gerät (3), und
n) Akzeptieren (S14) des von dem zweiten Server (2) übertragenen Gerätezertifikats (Z6) durch das IoT-Gerät (3), falls die von dem zweiten Server (2) übertragene Berechtigungs-Information (BI5) der gebildeten Berechtigungs-Information (BI1) entspricht.

2. Verfahren nach Anspruch 1,
**dadurch gekennzeichnet,**
**dass** der authentisierte und verschlüsselte erste Kommunikationskanal (KK1) und/oder der authentisierte und verschlüsselte zweite Kommunikationskanal (KK2) mittels eines KEM-Verfahrens kryptographisch geschützt wird.

3. Verfahren nach Anspruch 2,
**dadurch gekennzeichnet,**
**dass** als KEM-Verfahren KEMTLS verwendet wird.

4. Verfahren nach einem der Ansprüche 1 bis 3,
**dadurch gekennzeichnet,**
**dass** der authentisierte und verschlüsselte dritte Kommunikationskanal (KK3) als ein direkter Kommunikationskanal zwischen dem IoT-Gerät (3) und dem ersten Server (1) ausgebildet wird, oder
**dass** der authentisierte und verschlüsselte dritte Kommunikationskanal (KK3) als ein getunnelter Kommunikationskanal mittels Tunneling über den authentisierten und verschlüsselten ersten Kommunikationskanal (KK1) und den authentisierten und verschlüsselten zweiten Kommunikationskanal (KK2) ausgebildet wird, wobei der zweite Server (2) insbesondere als Weiterleitungsinstanz hinsichtlich der Schritte f) und g) eingesetzt wird.

5. Verfahren nach einem der Ansprüche 1 bis 4,
**dadurch gekennzeichnet,**
**dass** der erste Server (1) vor der Durchführung des Schrittes a) mit einem Wurzelzertifikat (Z1) der Hersteller-Domäne, einem Wurzelzertifikat (Z2) der Kunden-Domäne, einem Nutzerzertifikat (Z5) der Hersteller-Domäne für den ersten Server (1) umfassend einen öffentlichen Schlüssel des ersten Servers (1) und einem privaten Schlüssel (P1) des ersten Servers (1) ausgestattet wird,
**dass** der zweite Server (2) vor der Durchführung des Schrittes a) mit dem Wurzelzertifikat (Z1) der Hersteller-Domäne, dem Wurzelzertifikat (Z2) der Kunden-Domäne, einem Nutzerzertifikat (Z4) der Kunden-Domäne für den zweiten Server (2) umfassend einen öffentlichen Schlüssel des zweiten Servers (2) in der Kunden-Domäne und mit einem privaten Schlüssel (P2) des zweiten Servers (P2) ausgestattet wird, und
**dass** das IoT-Gerät (3) vor der Durchführung des Schrittes b) mit dem Wurzelzertifikat (Z1) der Hersteller-Domäne, mit einem Nutzerzertifikat (Z3) der Hersteller-Domäne für das IoT-Gerät (3) umfassend einen öffentlichen Schlüssel des IoT-Gerätes (3) in der Hersteller-Domäne und mit einem privaten Schlüssel (P3) des IoT-Gerätes (3) ausgestattet wird.

6. Verfahren nach einem der Ansprüche 1 bis 5,
**dadurch gekennzeichnet,**
**dass** der erste Sitzungsschlüssel (K1) dem ersten Server (1) und dem zweiten Server (2) bekannt ist und dem IoT-Gerät (3) unbekannt ist,
**dass** der zweite Sitzungsschlüssel (K2) dem zweiten Server (2) und dem IoT-Gerät (3) bekannt ist und dem ersten Server (1) unbekannt ist, und/oder
**dass** der dritte Schlüssel (K3) dem ersten Server (1) und dem IoT-Gerät (3) bekannt ist und dem zweiten Server (2) unbekannt ist.

7. Verfahren nach einem der Ansprüche 1 bis 6,
**dadurch gekennzeichnet,**
**dass** der Schritt d) umfasst, dass das eine zufällige Zahl oder eine quasi-zufällige Zahl von dem IoT-Gerät (3) als Berechtigungs-Information (BI1) gebildet wird (S4).

8. Verfahren nach einem der Ansprüche 1 bis 7,
**dadurch gekennzeichnet,**
**dass** der Schritt m) ausgebildet ist durch:
Übertragen (S13) des erhaltenen Gerätezertifikats (Z6) zusammen mit der Berechtigungs-Information (BI5) von dem zweiten Server (2) innerhalb einer einzigen Sitzung über den zweiten Kommunikationskanal (KK2) an das IoT-Gerät (3), wobei die Berechtigungs-Information (BI5) vorzugsweise als Teil einer Zertifikatserweiterung des Gerätezertifikats (Z6) von dem zweiten Server (2) über den zweiten Kommunikationskanal (KK2) an das IoT-Gerät (3) übertragen wird.

9. Verfahren nach einem der Ansprüche 1 bis 8,
**dadurch gekennzeichnet,**
**dass** die in den Schritten f) und g) übertragene kryptographisch geschützte Berechtigungs-Information (BI2) als eine KEM-geschützte Protokoll-Nachricht ausgebildet wird.

10. Verfahren nach einem der Ansprüche 1 bis 9,
**dadurch gekennzeichnet,**
**dass** der authentisierte und verschlüsselte zweite Kommunikationskanal (KK2) nach dem Schritt m) beendet oder invalidiert wird.

11. Verfahren nach einem der Ansprüche 1 bis 10,
**dadurch gekennzeichnet,**
**dass** das IoT-Gerät (3) basierend auf der gebildeten Berechtigungs-Information (BI1) nur das Laden genau eines Satzes von Konfigurationsdaten umfassend das Gerätezertifikat (Z6) zulässt.

12. Verfahren nach einem der Ansprüche 1 bis 11,
**dadurch gekennzeichnet,**
**dass** der erste Server (1), der zweite Server (2) und das IoT-Gerät (3) jeweils mit einem KEM-basierten Protokollstack ausgestattet werden, wobei der KEM-basierte Protokollstack des IoT-Gerätes (3) vorzugsweise zusätzlich mit der Eignung für Provisional-Accept ausgestattet wird, wobei der KEM-basierte Protokollstack vorzugsweise dazu eingerichtet ist, KEMTLS oder KEMTLS-PDK zu implementieren.

13. Verfahren nach einem der Ansprüche 1 bis 12,
**dadurch gekennzeichnet,**
**dass** der Schritt c) ausgebildet ist durch:
Aufbauen des über den zweiten Server (2) laufenden, authentisierten und verschlüsselten dritten Kommunikationskanals (KK3) zwischen dem IoT-Gerät (3) und dem ersten Server (1) umfassend Ableiten eines dem IoT-Gerät (3) und dem ersten Server (1) gemeinsamen dritten Sitzungsschlüssels (K3).

14. Verfahren nach einem der Ansprüche 1 bis 12,
**dadurch gekennzeichnet,**
**dass** eine geräteindividuelle PIN vor der Durchführung des Schrittes c) in dem ersten Server (1) und dem IoT-Gerät (3) jeweils sicher gespeichert wird, wobei die PIN zum Aufbauen des über den zweiten Server (2) laufenden, authentisierten und verschlüsselten dritten Kommunikationskanals (KK3) verwendet wird.

15. Computerprogrammprodukt, welches auf einer programmgesteuerten Einrichtung die Durchführung des Verfahrens nach einem der Ansprüche 1 bis 14 veranlasst.

16. System zum Onboarding für ein IoT-Gerät (3) eines Herstellers in einer Infrastruktur eines Kunden, umfassend einen ersten Server (1) einer Hersteller-Domäne des Herstellers und einen zweiten Server (2) einer Kunden-Domäne des Kunden, wobei der erste Server (1), der zweite Server (2) und das IoT-Gerät (3) zur Durchführung des Verfahrens nach einem der Ansprüche 1 bis 14 eingerichtet sind.

## Claims

1. Method for onboarding an IoT device (3) of a manufacturer in an infrastructure of a customer by means of a first server (1) of a manufacturer domain of the manufacturer and a second server (2) of a customer domain of the customer, involving:
a) setting up (S1) an authenticated and encrypted first communication channel (KK1) between the first server (1) and the second server (2), comprising deriving a session key (K1) that is common to the first server (1) and the second server (2),
b) providing (S2) an authenticated and encrypted second communication channel (KK2) between the IoT device (3) and the second server (2), comprising deriving a second session key (K2) that is common to the second server (2) and the IoT device (3),
c) setting up (S3) an authenticated and encrypted third communication channel (KK3), which runs via the second server (2), between the IoT device (3) and the first server (1), to which a third key (K3) that is common to the IoT device (3) and the first server (1) is assigned,
d) forming (S4) permission information (BI1) by way of the IoT device (3),
e) cryptographically protecting (S5) the formed permission information (BI1) by way of the IoT device (3) by means of the third key (K3),
f) transmitting (S6) the cryptographically protected permission information (BI2) from the IoT device (3) to the second server (2) via the second communication channel (KK2),
g) transmitting (S7) the cryptographically protected permission information (BI2) from the second server (2) to the first server (1) via the first communication channel (KK1),
h) decrypting (S8) the cryptographically protected permission information (BI2) transmitted from the second server (2) to the first server (1) by way of the first server (1) by means of the third key (K3),
i) encrypting (S9) the decrypted permission information (BI3) by way of the first server (1) by means of the first session key (K1),
j) transmitting (S10) the permission information (BI4) encrypted with the first session key (K1) from the first server (1) to the second server (2) via the first communication channel (KK1),
k) decrypting (S11) the permission information (BI4) encrypted with the first session key (K1) by way of the second server (2),
l) sending (S12) a request (A) to obtain a device certificate (Z6), associated with the IoT device (3), of the customer domain from the second server (2) to a certificate authority (4),
m) transmitting (S13) the obtained device certificate (Z6) and the permission information (BI5) decrypted by the second server (2) from the second server (2) to the IoT device (3) via the second communication channel (KK2), and
n) accepting (S14) the device certificate (Z6) transmitted by the second server (2) by way of the IoT device (3) if the permission information (BI5) transmitted by the second server (2) matches the formed permission information (BI1).

2. Method according to Claim 1,
**characterized**
**in that** the authenticated and encrypted first communication channel (KK1) and/or the authenticated and encrypted second communication channel (KK2) are/is cryptographically protected by means of a KEM method.

3. Method according to Claim 2,
**characterized**
**in that** the KEM method used is KEMTLS.

4. Method according to any of Claims 1 to 3,
**characterized**
**in that** the authenticated and encrypted third communication channel (KK3) is rendered as a direct communication channel between the IoT device (3) and the first server (1), or
**in that** the authenticated and encrypted third communication channel (KK3) is rendered as a tunnelled communication channel by tunnelling via the authenticated and encrypted first communication channel (KK1) and the authenticated and encrypted second communication channel (KK2), the second server (2) being used in particular as a forwarding instance in respect of steps f) and g) .

5. Method according to any of Claims 1 to 4,
**characterized**
**in that**, before step a) is performed, the first server (1) is equipped with a root certificate (Z1) of the manufacturer domain, a root certificate (Z2) of the customer domain, a user certificate (Z5) of the manufacturer domain for the first server (1), comprising a public key of the first server (1), and a private key (P1) of the first server (1),
**in that**, before step a) is performed, the second server (2) is equipped with the root certificate (Z1) of the manufacturer domain, the root certificate (Z2) of the customer domain, a user certificate (Z4) of the customer domain for the second server (2), comprising a public key of the second server (2) in the customer domain, and with a private key (P2) of the second server (P2), and
**in that**, before step b) is performed, the IoT device (3) is equipped with the root certificate (Z1) of the manufacturer domain, with a user certificate (Z3) of the manufacturer domain for the IoT device (3), comprising a public key of the IoT device (3) in the manufacturer domain, and with a private key (P3) of the IoT device (3).

6. Method according to any of Claims 1 to 5,
**characterized**
**in that** the first session key (K1) is known to the first server (1) and the second server (2) and is unknown to the IoT device (3),
**in that** the second session key (K2) is known to the second server (2) and the IoT device (3) and is unknown to the first server (1), and/or in that the third key (K3) is known to the first server (1) and the IoT device (3) and is unknown to the second server (2).

7. Method according to any of Claims 1 to 6,
**characterized**
**in that** step d) comprises a random number or a quasi-random number being formed (S4) by the IoT device (3) as permission information (BI1).

8. Method according to any of Claims 1 to 7,
**characterized**
**in that** step m) is rendered by:
transmitting (S13) the obtained device certificate (Z6) together with the permission information (BI5) from the second server (2) to the IoT device (3) via the second communication channel (KK2) within a single session, the permission information (BI5) being transmitted from the second server (2) to the IoT device (3) via the second communication channel (KK2) preferably as part of a certificate extension of the device certificate (Z6).

9. Method according to any of Claims 1 to 8,
**characterized**
**in that** the cryptographically protected permission information (BI2) transmitted in steps f) and g) is rendered as a KEM-protected protocol message.

10. Method according to any of Claims 1 to 9,
**characterized**
**in that** the authenticated and encrypted second communication channel (KK2) is terminated or invalidated after step m).

11. Method according to any of Claims 1 to 10,
**characterized**
**in that** the IoT device (3) takes the formed permission information (BI1) as a basis for permitting only precisely one set of configuration data comprising the device certificate (Z6) to be loaded.

12. Method according to any of Claims 1 to 11,
**characterized**
**in that** the first server (1), the second server (2) and the IoT device (3) are each equipped with a KEM-based protocol stack, the KEM-based protocol stack of the IoT device (3) preferably additionally being equipped with suitability for Provisional Accept, the KEM-based protocol stack preferably being set up to implement KEMTLS or KEMTLS-PDK.

13. Method according to any of Claims 1 to 12,
**characterized**
**in that** step c) is rendered by:
setting up the authenticated and encrypted third communication channel (KK3), which runs via the second server (2), between the IoT device (3) and the first server (1), comprising deriving a third session key (K3) that is common to the IoT device (3) and the first server (1).

14. Method according to any of Claims 1 to 12,
**characterized**
**in that**, before step c) is performed, a device-individual PIN is securely stored in each of the first server (1) and the IoT device (3), the PIN being used to set up the authenticated and encrypted third communication channel (KK3) running via the second server (2).

15. Computer program product that causes the method according to any of Claims 1 to 14 to be performed on a program-controlled apparatus.

16. System for onboarding an IoT device (3) of a manufacturer in an infrastructure of a customer, comprising a first server (1) of a manufacturer domain of the manufacturer and a second server (2) of a customer domain of the customer, the first server (1), the second server (2) and the IoT device (3) being set up to perform the method according to any of Claims 1 to 14.

## Revendications

1. Procédé d'embarquement pour un dispositif IoT (3) d'un fabricant dans une infrastructure d'un client au moyen d'un premier serveur (1) d'un domaine fabricant du fabricant et d'un deuxième serveur (2) d'un domaine client du client, consistant à:
a) établir (S1) un premier canal de communication authentifié et crypté (KK1) entre le premier serveur (1) et le second serveur (2), comprenant la dérivation d'une clé de session (K1) commune au premier serveur (1) et au second serveur (2),
b) fournir (S2) un deuxième canal de communication authentifié et crypté (KK2) entre le dispositif IoT (3) et le deuxième serveur (2), comprenant la dérivation d'une deuxième clé de session (K2) commune au deuxième serveur (2) et au dispositif IoT (3),
c) établir (S3) entre le dispositif IoT (3) et le premier serveur (1) un troisième canal de communication (KK3) authentifié et crypté passant par le deuxième serveur (2), auquel est associée une troisième clé (K3) commune au dispositif IoT (3) et au premier serveur (1),
d) formuler (S4) une information d'autorisation (BI1) par le dispositif IoT (3),
e) protéger cryptographiquement (S5) l'information d'autorisation formulée (BI1) par le dispositif IoT (3) au moyen de la troisième clé (K3),
f) transmettre (S6) l'information d'autorisation protégée cryptographiquement (BI2) du dispositif IoT (3) au deuxième serveur (2) par le deuxième canal de communication (KK2),
g) transmettre (S7) l'information d'autorisation protégée cryptographiquement (BI2) du deuxième serveur (2) au premier serveur (1) via le premier canal de communication (KK1),
h) décrypter (S8) par le premier serveur (1), au moyen de la troisième clé (K3), l'information d'autorisation (BI2) protégée cryptographiquement et transmise par le deuxième serveur (2) au premier serveur (1),
i) crypter (S9) l'information d'autorisation décryptée (BI3) par le premier serveur (1) au moyen de la première clé de session (K1),
j) transmettre (S10) l'informations d'autorisation (BI4) cryptée avec la première clé de session (K1) du premier serveur (1) au deuxième serveur (2) via le premier canal de communication (KK1),
k) décrypter (S11) par le deuxième serveur (2) l'information d'autorisation (BI4) cryptée avec la première clé de session (K1),
l) envoyer (S12) une demande (A) d'obtention d'un certificat de dispositif (Z6) du domaine client associé au dispositif IoT (3) depuis le second serveur (2) à une autorité de certification (4),
m) transmettre (S13) le certificat de dispositif obtenu (Z6) et l'information d'autorisation (BI5) décryptée par le second serveur (2) du second serveur (2) au dispositif IoT (3) via le second canal de communication (KK2), et
n) accepter (S14) par le dispositif IoT (3) le certificat de dispositif (Z6) transmis par le second serveur (2) si l'information d'autorisation (BI5) transmise par le second serveur (2) correspondent à l'information d'autorisation (BI1) formulées.

2. Procédé selon la revendication 1,
**caractérisé en ce que**,
le premier canal de communication authentifié et crypté (KK1) et/ou le deuxième canal de communication authentifié et crypté (KK2) est/sont protégé(s) cryptographiquement à l'aide d'un procédé KEM.

3. Procédé selon la revendication 2, **caractérisé en ce que** le procédé KEM utilisé est KEMTLS.

4. Procédé selon l'une quelconque des revendications 1 à 3, **caractérisé en ce que**,
le troisième canal de communication authentifié et crypté (KK3) est formé comme un canal de communication direct entre le dispositif IoT (3) et le premier serveur (1), ou
**en ce que** le troisième canal de communication authentifié et crypté (KK3) est formé comme un canal de communication tunnelisé au moyen d'une tunnelisation via le premier canal de communication authentifié et crypté (KK1) et le deuxième canal de communication authentifié et crypté (KK2), le deuxième serveur (2) étant utilisé en particulier comme instance de retransmission en ce qui concerne les étapes f) et g).

5. Procédé selon l'une quelconque des revendications 1 à 4, **caractérisé en ce que**
le premier serveur (1) est équipé, avant l'exécution de l'étape a), d'un certificat racine (Z1) du domaine fabricant, d'un certificat racine (Z2) du domaine client, d'un certificat d'utilisateur (Z5) du domaine fabricant pour le premier serveur (1) comprenant une clé publique du premier serveur (1) et une clé privée (P1) du premier serveur (1),
**en ce que** le deuxième serveur (2) est équipé, avant l'exécution de l'étape a), du certificat racine (Z1) du domaine fabricant, du certificat racine (Z2) du domaine client, d'un certificat d'utilisateur (Z4) du domaine client pour le deuxième serveur (2) comprenant une clé publique du deuxième serveur (2) dans le domaine client et avec une clé privée (P2) du deuxième serveur (2), et
**en ce que** le dispositif IoT (3) est équipé, avant l'exécution de l'étape b), du certificat racine (Z1) du domaine fabricant, d'un certificat d'utilisateur (Z3) du domaine fabricant pour le dispositif IoT (3) comprenant une clé publique du dispositif IoT (3) dans le domaine fabricant et d'une clé privée (P3) du dispositif IoT (3).

6. Procédé selon l'une quelconque des revendications 1 à 5, **caractérisé en ce que**
la première clé de session (K1) est connue du premier serveur (1) et du deuxième serveur (2) et est inconnue du dispositif IoT (3),
**en ce que** la deuxième clé de session (K2) est connue du deuxième serveur (2) et du dispositif IoT (3) et est inconnue du premier serveur (1), et/ou
**en ce que** la troisième clé (K3) est connue du premier serveur (1) et du dispositif IoT (3) et est inconnue du deuxième serveur (2) .

7. Procédé selon l'une quelconque des revendications 1 à 6, **caractérisé en ce que**
l'étape d) comprend la formation (S4) d'un nombre aléatoire ou d'un nombre quasi-aléatoire par le dispositif IoT (3) comme information d'autorisation (BI1).

8. Procédé selon l'une quelconque des revendications 1 à 7, **caractérisé en ce que**
l'étape m) est réalisée en
transmettant (S13) le certificat de dispositif (Z6) obtenu en même temps que l'information d'autorisation (BI5) du deuxième serveur (2) au dispositif IoT (3) au cours d'une seule session via le deuxième canal de communication (KK2), l'information d'autorisation (BI5) étant de préférence transmise au dispositif IoT (3) en tant que partie d'une extension de certificat du certificat de dispositif (Z6) du deuxième serveur (2) via le deuxième canal de communication (KK2).

9. Procédé selon l'une quelconque des revendications 1 à 8, **caractérisé en ce que**
l'information d'autorisation (BI2) protégée cryptographiquement transmise dans les étapes f) et g) est conçue sous la forme de message de protocole protégé par KEM.

10. Procédé selon l'une quelconque des revendications 1 à 9, **caractérisé en ce que**
le deuxième canal de communication authentifié et crypté (KK2) est terminé ou invalidé après l'étape m).

11. Procédé selon l'une quelconque des revendications 1 à 10, **caractérisé en ce que**
le dispositif IoT (3) autorise, sur la base de l'information d'autorisation formulée (BI1), uniquement le chargement d'exactement un ensemble de données de configuration comprenant le certificat de dispositif (Z6).

12. Procédé selon l'une quelconque des revendications 1 à 11, **caractérisé en ce que**
le premier serveur (1), le deuxième serveur (2) et le dispositif IoT (3) sont équipés chacun d'une pile de protocoles basée sur KEM, la pile de protocoles basée sur KEM du dispositif IoT (3) étant de préférence équipée en outre de la capacité d'acceptation provisoire, la pile de protocoles basée sur KEM étant de préférence agencée pour mettre en oeuvre KEMTLS ou KEMTLS-PDK.

13. Procédé selon l'une quelconque des revendications 1 à 12, **caractérisé en ce que**
l'étape c) est réalisée par
l'établissement du troisième canal de communication authentifié et crypté (KK3) entre le dispositif IoT (3) et le premier serveur (1), passant par le deuxième serveur (2), comprenant la dérivation d'une troisième clé de session (K3) commune au dispositif IoT (3) et au premier serveur (1).

14. Procédé selon l'une quelconque des revendications 1 à 12, **caractérisé en ce que**
un PIN individuel à l'appareil est mémorisé de manière sûre avant l'exécution de l'étape c) respectivement dans le premier serveur (1) et dans l'appareil IoT (3), le PIN étant utilisé pour établir le troisième canal de communication (KK3) authentifié et crypté passant par le deuxième serveur (2).

15. Produit programme informatique qui génère, sur un dispositif commandé par un programme, la mise en oeuvre du procédé selon l'une quelconque des revendications 1 à 14.

16. Système d'embarquement pour un dispositif IoT (3) d'un fabricant dans une infrastructure d'un client, comprenant un premier serveur (1) d'un domaine fabricant du fabricant et un deuxième serveur (2) d'un domaine client du client, le premier serveur (1), le deuxième serveur (2) et le dispositif IoT (3) étant agencés pour mettre en oeuvre le procédé selon l'une des revendications 1 à 14.
